# FASCICULE DE BREVET EUROPEEN

(11) **EP 1 470 084 B1**
(45) Date de publication et mention de la délivrance du brevet: **19.03.2008**
(21) Numéro de dépôt: 03715058.8
(22) Date de dépôt: 28.01.2003
(51) Int. Cl.: C02F 1/78, C02F 1/72

(54) **PROCEDE POUR LE TRAITEMENT D'EFFLUENTS INDUSTRIELS CONTENANT DES POLLUANTS ORGANIQUES**
VERFAHREN ZUR BEHANDLUNG VON INDUSTRIEABWASSERENTHALTENDE ORGANISCHE SCHADSTOFFE
METHOD FOR THE TREATMENT OF INDUSTRIAL EFFLUENT CONTAINING ORGANIC POLLUTANTS

(30) Priorité: 01.02.2002 FR 0201224
(43) Date de publication de la demande: 27.10.2004
(73) Titulaire: CENTRE NATIONAL DE LA RECHERCHE SCIENTIFIQUE, 75016 Paris (FR)
(72) Inventeur: KARPEL VEL LEITNER, Nathalie, F-86210 VOUNEUIL SUR VIENNE (FR); LEGUBE, Bernard, F-86300 CHAUVIGNY (FR); PONTLEVOY-DELANOË , Florence, F-86000 POITIERS (FR)
(74) Mandataire: Habasque, Etienne J. Jean-François
(86) Numéro de dépôt international: PCT/FR2003/000259
(87) Numéro de publication internationale: WO 2003/064333

(56) Documents cités:
- EP-A- 0 257 983
- EP-A- 0 561 458
- EP-A- 1 018 489
- WO-A-01/38235

## Description

La présente invention concerne un procédé de traitement d'effluents en vue de réduire la teneur en polluants organiques.

Le traitement des effluents est un problème majeur pour de très nombreux secteurs de l'industrie, notamment l'électronique, l'agroalimentaire, le traitement de surface, le textile, la papeterie. Dans une industrie donnée, les effluents peuvent être traités sur place avec rejet d'eaux usées dans le réseau collectif, traités sur place avec rejet isolé ou recyclage, ou envoyés en vue de leur traitement dans des entreprises spécialisées. Les techniques utilisées reposent généralement sur un procédé physico-chimique, un procédé biologique, une filtration sur membrane, ou la combinaison de ces techniques.

Parmi les procédés physico-chimiques catalysés, voir EP0257983, on peut citer notamment le traitement par l'oxygène et/ou l'ozone en présence de Ru ou de Ir sur CeO₂ ou sur ZrO₂, sous pression de 1 à 50 bars à une température entre 100 et 400°C. On peut également citer l'utilisation d'ozone à température ambiante, en présence' de Ru/CeO₂ pour le traitement d'une solution aqueuse d'acide succinique ("B. Legube, et al., Catalysis Today, 53 (1999)61-72" ou "N. Karpel Vel Leitner, et al, New J. Chem. 2000, 229-233"). Ces procédés ont cependant été testés uniquement à l'échelle du laboratoire, en mode discontinu, sur des solutions aqueuses contenant un composé organique modèle, à savoir l'acide succinique.

Il est également connu de combiner diverses techniques. Ainsi, WO-00/40514 propose un procédé industriel associant une ozonation sur catalyseur hétérogène, une adsorption sur charbon actif en grain accueillant une biomasse épuratoire, et une filtration sur membrane. Le catalyseur est un métal sur un support minéral tel que la silice, l'alumine, les aluminosilicates, le dioxyde de titane, la zircone ou leurs mélanges. Le catalyseur hétérogène sous forme de billes est introduit dans une colonne.

Les procédés physico-chimiques et biologiques ne permettent pas l'obtention d'eau ayant une qualité suffisante pour sa réutilisation dans des secteurs nécessitant de l'eau très pure. Le développement des procédés membranaires est limité par des problèmes technologiques tels que le colmatage et la durée de vie des membranes. Plusieurs étapes de prétraitement sont nécessaires pour résoudre ces problèmes.

La présente invention a pour but de fournir un procédé de traitement par catalyse hétérogène d'effluents industriels contenant des polluants organiques générant une demande chimique en oxygène inférieure à 20 g/L, permettant d'obtenir une transformation totale du carbone en CO₂ ou une dégradation partielle qui rend le carbone organique biodégradable, tout en maintenant le catalyseur dans le circuit réactionnel.

Le procédé selon l'invention pour le traitement d'un effluent contenant des polluants organiques consiste à traiter ledit effluent par ozonation en présence d'un catalyseur constitué par des grains formés d'un métal déposé sur un support oxyde, et il est caractérisé en ce que le catalyseur est constitué par une poudre dont les grains sont constitués par une phase catalytiquement active comprenant du ruthénium et/ou de l'iridium sur un support constitué par de l'oxyde de cérium, de l'oxyde de zirconium, de l'oxyde de titane, ou leurs mélanges, la granulométrie de la poudre étant entre 20 et 500 µm, et en ce qu'il consiste à :
- introduire en continu dans un réacteur contenant le catalyseur d'une part l'effluent à traiter, et d'autre part l'ozone, le catalyseur étant maintenu en suspension dans le réacteur ;
- faire passer l'effluent traité par l'ozone et le catalyseur en continu à travers un système de séparation en vue de séparer le catalyseur ;
- récupérer une partie de l'effluent traité débarrassé du catalyseur, et recycler l'autre partie avec le catalyseur dans le réacteur.

L'ozone est introduit de préférence sous forme d'air ozoné ou sous forme d'oxygène ozoné, désignés ci-après par "gaz ozoné".

Le catalyseur a de préférence, une granulométrie comprise entre 50 à 200 µm, une masse volumique comprise entre 1 et 3 g/cm³, un volume poreux total compris entre 0,1 et 1 cm³/g présentant des mésopores de diamètre moyen compris entre 10 et 40 nm. La phase catalytiquement active représente de préférence entre 0,5% et 10% en poids du catalyseur. Elle peut contenir éventuellement, en plus de Ru et/ou Ir, au moins un autre métal choisi parmi les métaux nobles. Le support de catalyseur peut contenir, en plus de l'oxyde de cérium, de l'oxyde de zirconium et/ou de l'oxyde de titane, au moins un autre composé minéral tel que l'alumine, la silice, le charbon actif. Il est particulièrement avantageux d'utiliser un catalyseur dont le support, de préférence CeO₂, est tel qu'il conserve une surface spécifique d'au moins 20m²/g après avoir subi une calcination à 800°C pendant 6 heures. Le catalyseur peut être maintenu en suspension à l'aide d'une agitation mécanique ou par d'autres systèmes tels que par exemple la technique de courant ascensionnel. La réintroduction dans le réacteur de l'effluent chargé en catalyseur et constituant le condensat de la membrane contribue au maintien en suspension du catalyseur.

Le catalyseur peut être obtenu en déposant la phase métallique catalytiquement active sur un support, ou en imprégnant ledit support par une solution aqueuse contenant la phase métallique catalytiquement active en suspension, puis en séchant le support par un traitement thermique dans les conditions appropriées.

Les débits respectifs de l'effluent et du gaz ozoné sont réglés de telle sorte que le rapport de la masse d'ozone à la masse de C correspondant aux polluants soit inférieur à 40, ce qui assure une durée de contact suffisante entre l'effluent, l'ozone et le catalyseur. Ce rapport dépend notamment de la nature des polluants.

L'ozonation peut être effectuée à des températures relativement basses, comparées aux températures utilisées dans le procédé de l'art antérieur utilisant l'oxygène comme oxydant et Ru/CeO₂ comme catalyseur. Il est particulièrement préféré d'effectuer l'ozonation à la température ambiante et à la pression atmosphérique.

La concentration en catalyseur dans le réacteur d'ozonation est comprise entre 0,2 et 20 g/l. Une concentration entre 0,4 et 0,8 g/l est particulièrement préférée. A titre d'exemple de catalyseur, on peut citer un catalyseur constitué par des grains formés de Ru déposé sur CeO₂.

Le système de séparation du catalyseur est un système permettant de retenir le catalyseur, en laissant passer l'effluent traité qui peut éventuellement contenir des particules minérales ayant une dimension inférieure à celle des particules de catalyseur. On peut citer notamment les séparateurs du type hydrocyclone (par exemple celui qui est commercialisé par la société LAKOS), les tamiseurs statiques à grille courbe (par exemple celui qui est commercialisé par la société Andritz), une bougie filtrante du type Johnson Screens ou un ensemble de bougies filtrantes disposées en configuration Backwash de Pall, les crépines ou collecteurs (par exemple ceux qui sont commercialisés par la société Johnson Screens), les décanteurs par exemple de type lamellaire.

La séparation du catalyseur peut en outre être effectuée sur une membrane filtrante en mode tangentiel en céramique. L'utilisation de plusieurs membranes montées en parallèle dans le dispositif de filtration permet d'augmenter les quantités traitées. Le montage d'un réfrigérant à la place d'une membrane, ou en plus des membranes, permet de diminuer la température de l'effluent qui circule dans l'installation, lorsque cette température a été élevée de façon significative par les diverses pompes placées sur les conduites.

Lorsque le dispositif de séparation est une membrane, une bougie ou une crépine, le procédé de l'invention peut être mis en oeuvre dans une installation dans laquelle le dispositif de séparation est immergé dans le réacteur. L'effluent à traiter est introduit dans le réacteur. Le perméat du dispositif de séparation constitue l'effluent traité et il est extrait du réacteur. Le catalyseur est retenu par le dispositif de séparation dans le réacteur.

Le procédé de l'invention peut en outre être mis en oeuvre dans une installation qui comprend d'une part un réacteur dans lequel l'effluent à traiter est soumis à l'ozonation, et d'autre part un dispositif de séparation, ledit dispositif de séparation étant relié au réacteur par une première conduite pour le transfert de l'effluent du réacteur vers le dispositif de séparation et par une seconde conduite pour le transfert du concentrat contenant le catalyseur vers le réacteur.

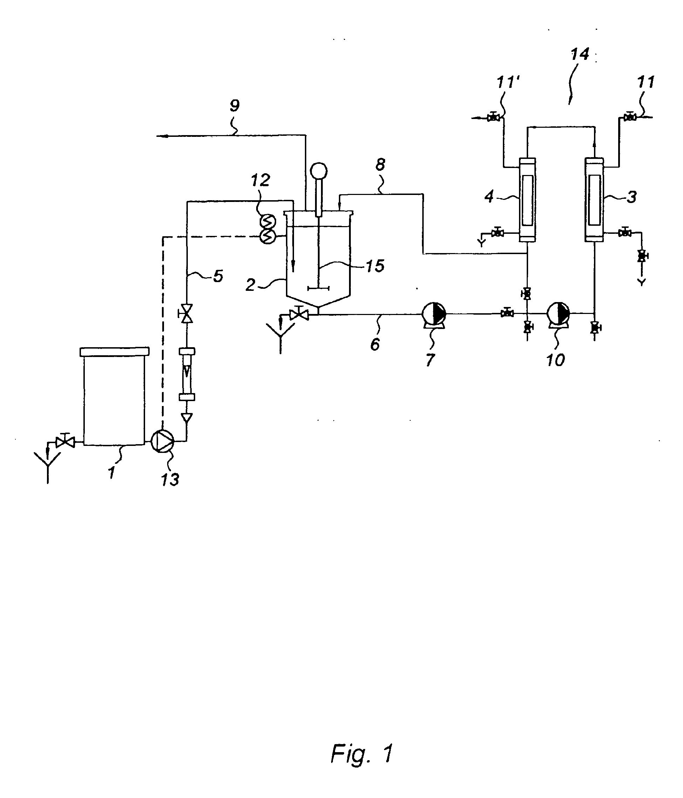

La figure 1 représente une telle installation dans laquelle le réacteur et le dispositif de séparation, qui est dans le cas présent un dispositif de filtration, sont séparés. Une telle installation comprend un réservoir (1) pour le stockage de l'effluent à traiter, un réacteur de traitement par l'ozone (2), un dispositif de filtration (14). Dans le cas particulier représenté, le dispositif de filtration comprend deux membranes (3) et (4), ainsi qu'une pompe (10). Le réservoir (1) et le réacteur (2) sont reliés par une conduite (5) munie d'une pompe d'alimentation (13) reliée à des capteurs (12) du niveau de liquide dans le réacteur (2). Le réacteur (2) est muni d'un agitateur mécanique (15). Dans le cas représenté, le gaz ozoné est introduit par l'axe de cet agitateur. D'autres systèmes d'introduction du gaz ozoné peuvent être mis en oeuvre, notamment un diffuseur dans le réacteur ou un mélangeur statique sur une conduite reliant le réacteur au système de filtration. D'autres systèmes d'agitation et de diffusion de gaz peuvent être utilisés, notamment les systèmes à courant ascensionnel. Le gaz appauvri en ozone est évacué par une conduite (9). Le réacteur (2) et le dispositif de filtration (14) sont reliés d'une part par une conduite (6) comprenant une pompe d'alimentation (7) pour le transfert du réacteur (2) vers le dispositif de filtration, et d'autre part par une conduite (8) pour le transfert du dispositif de filtration vers le réacteur (2). La membrane (3) d'une part, la membrane (4) d'autre part sont munies respectivement de conduites (11) et (11') pour le transfert de l'effluent traité vers une cuve de récupération (non représentée). Lors du fonctionnement de l'installation, l'effluent à traiter est pompé par la pompe (13) du réservoir (1) vers le réacteur (2). Le niveau dans le réacteur (2) est maintenu constant grâce aux capteurs de niveau (12) qui agissent par l'intermédiaire de la pompe (13) sur le débit à la sortie du réservoir (1). Le catalyseur est introduit dans le réacteur par un accès dans le couvercle. Le gaz ozoné est introduit dans le réacteur par l'axe de l'agitateur (15) sous forme de bulles de gaz. Le gaz appauvri en ozone est évacué par la conduite (9). La solution est agitée à raison de 100 à 1500 tr/min. L'effluent circule dans le dispositif de filtration à une pression maximale de 7 bar imposée par la pompe de circulation (10). Lors du passage de l'effluent traité par ozonation à travers les membranes, le catalyseur est retenu par les membranes, et l'effluent est évacué par les conduites (11) et (11') en continu avec un débit de 10 à 200 l/h.

L'invention est décrite ci-après plus en détail à l'aide d'exemples auxquels elle n'est cependant pas limitée.

### Exemple 1

Un effluent issu d'un procédé de traitement de surface, qui contenait des détergents, des hydrocarbures et de l'hydrate d'hydrazine, correspondant à une demande chimique en oxygène (DCO) initiale de 1550 mg/l (déterminée par la méthode normalisée NFT90-101, équivalente à la norme internationale ISO 6060:1986) a été traité selon le procédé de l'invention, dans une installation analogue à celle décrite ci-dessus. La membrane était une membrane CéRAM INSIDE^{®} commercialisée par la société TAMI INDUSTRIES.

On a introduit dans le réacteur 20 g de catalyseur Ru/CeO₂ et l'effluent à un débit de 38 1/h, correspondant à un temps de contact de 40 minutes. On a fait passer un courant d'oxygène ozoné correspondant à un débit d'ozone pur de 1 g/h. On a ainsi constaté 85% d'élimination de la DCO sur l'effluent récupéré à la sortie de la membrane. Le rapport DCO / DBO₅ (DBO: demande biochimique en oxygène après 5 jours, déterminé par la méthode normalisée NF EN1899-1), qui était de 9 dans l'effluent initial, est de 3 dans l'effluent traité, ce qui confirme une très forte amélioration de la biodégradabilité de l'effluent. Lorsque l'installation fonctionne sans membrane et donc sans catalyseur une telle amélioration n'est pas observée.

### Exemple 2

Un effluent issu d'un procédé de sidérurgie et métallurgie, qui contenait des glycols, du glycérol, de l'éthanol et de l'acide acétique, correspondant à une demande chimique en oxygène (DCO) initiale de 3 000 mg/l, a été traité selon le procédé de l'invention dans une installation analogue à celle utilisée dans l'exemple 1.

On a introduit dans le réacteur 20 g de catalyseur Ru/CeO₂ et l'effluent à un débit de 38 l/h, correspondant à un temps de contact de 40 minutes. On a fait passer un courant d'oxygène ozoné correspondant à un débit d'ozone pur de 0,5 g/h. On a ainsi constaté une transformation de l'effluent en effluent totalement biodégradable, le rapport DCO / DBO₅ étant égal à 1, pour une quantité d'ozone introduite correspondant à 3 g par g de C oxydé.

L'effluent s'est révélé totalement insensible à l'action de l'ozone lorsque le procédé a été mis en oeuvre dans l'installation sans membrane et donc sans catalyseur.

### Exemple 3

Un effluent issu d'un procédé de fabrication de produits phytosanitaires dilué au 20^{ème}, qui contenait des détergents, des pesticides et des solvants, correspondant à une demande chimique en oxygène (DCO) initiale de 650 mg/l a été traité selon le procédé de l'invention.

On a introduit dans le réacteur 20 g de catalyseur Ru/CeO₂ et l'effluent à un débit de 38 1/h, correspondant à un temps de contact de 40 minutes. On a fait passer un courant d'oxygène ozoné correspondant à un débit d'ozone pur de 30 g/h. On a ainsi constaté une transformation de 40% des polluants organiques en CO₂, pour une quantité d'ozone introduite correspondant à 6 g par g de C oxydé.

A titre comparatif, on a effectué sur un effluent de même origine, un traitement analogue à celui décrit ci-dessus, mais sans utiliser de membrane et donc sans catalyseur. Il apparaît que le taux de transformation est diminué de moitié pour une consommation 3 fois plus importante d'ozone.

### Exemple 4

Un effluent issu d'un procédé de recyclage du papier correspondant à une demande chimique en oxygène (DCO) initiale de 1500 mg/L a été traité selon le procédé de l'invention avec pour objectif une décoloration totale de l'eau.

On a introduit dans un réacteur 2 g/L de catalyseur Ru/CeO₂ et l'effluent à un débit de 150 L/h correspondant à un temps de contact de 10 minutes. On a fait passer un courant d'oxygène ozoné correspondant à un débit d'ozone pur de 12,5 g/h. On a ainsi constaté 80% de décoloration.

A titre comparatif, on a effectué un traitement par ozone sans catalyseur et sans recirculation sur le même effluent. Il apparaît que le taux de décoloration n'est plus que de 16% pour une consommation d'ozone 3 fois plus importante (36 g/h d'ozone apportés).

### Exemple 5

Un effluent issu d'un procédé de fabrication du papier présentant une DCO initiale de 180 mg/L après un traitement biologique a été traité selon le procédé de l'invention avec pour objectif la réalisation d'un traitement de finition permettant le recyclage de l'eau.

On a introduit dans le réacteur 0,5 g/L de catalyseur Ru/CeO₂ et l'effluent à des débits variants de 12,5 L/h à 50 L/h correspondant à des temps de contact de 2h à 30 minutes. On a ainsi constaté pour une consommation d'ozone de 2 g/g de DCO éliminée, une mise aux normes de rejet en DCO (120 mg/L) dès 30 minutes de contact. On a aussi constaté 66% d'abattement de la DCO à 2 h de temps de contact pour une consommation d'ozone de 3 g/g de DCO éliminée.

A titre comparatif, on a effectué un traitement par ozone sans catalyseur et sans recirculation sur le même effluent. Il apparaît que le pourcentage d'élimination de la DCO à 2 h est seulement de 51% pour une consommation d'ozone deux fois plus importante (6,2 g/g).

## Revendications

1. Procédé pour le traitement d'un effluent contenant des polluants organiques, consistant à traiter ledit effluent par ozonation en présence d'un catalyseur constitué par des grains formés d'un métal déposé sur un support oxyde, **caractérisé en ce que** le catalyseur est constitué par une poudre dont les grains sont constitués par une phase catalytiquement active comprenant du ruthénium et/ou de l'iridium sur un support constitué par de l'oxyde de cérium, de l'oxyde de zirconium, de l'oxyde de titane, ou leurs mélanges, la granulométrie de la poudre étant entre 20 et 500 µm, et **en ce qu'**il consiste à :
- introduire en continu dans un réacteur contenant le catalyseur d'une part l'effluent à traiter, et d'autre part l'ozone, le catalyseur étant maintenu en suspension dans le réacteur ;
- faire passer l'effluent traité par l'ozone et le catalyseur en continu à travers un système de séparation en vue de séparer le catalyseur ;
- récupérer une partie de l'effluent traité débarrassé du catalyseur, et recycler l'autre partie avec le catalyseur dans le réacteur.

2. Procédé selon la revendication 1, **caractérisé en ce que** l'ozone est introduit sous forme de gaz enrichi en ozone, le gaz étant l'air ou l'oxygène.

3. Procédé selon la revendication 1, **caractérisé en ce qu'**on règle les débits respectifs de l'effluent et du gaz ozoné de telle sorte que le rapport de la masse d'ozone à la masse de C correspondant aux polluants soit inférieur à 40.

4. Procédé selon la revendication 1, **caractérisé en ce qu'**il est mis en oeuvre à la température ambiante et à la pression atmosphérique.

5. Procédé selon la revendication 1, **caractérisé en ce que** la concentration en catalyseur dans le réacteur d'ozonation est comprise entre 0,2 et 20 g/l.

6. Procédé selon la revendication 1, **caractérisé en ce que** les grains du catalyseur ont une granulométrie comprise entre 50 à 200 µm, une masse volumique comprise entre 1 et 3 g/cm³, un volume poreux total compris entre 0,1 et 1 cm³/g présentant des mésopores de diamètre moyen compris entre 10 et 40 nm.

7. Procédé selon la revendication 1, **caractérisé en ce que** la phase catalytiquement active représente entre 0,5% et 10% en poids du catalyseur.

8. Procédé selon la revendication 1, **caractérisé en ce que** la phase active du catalyseur contient en outre au moins un autre métal choisi parmi les métaux nobles.

9. Procédé selon la revendication 1, **caractérisé en ce que** le support de catalyseur contient en outre au moins un composé minéral choisi parmi l'alumine, la silice, et le charbon actif.

10. Procédé selon la revendication 1, **caractérisé en ce que** le support du catalyseur est tel qu'il conserve une surface spécifique d'au moins 20m²/g après avoir subi une calcination à 800°C pendant 6 heures.

11. Procédé selon la revendication 1, **caractérisé en ce que** le système de séparation est un séparateur du type hydrocyclone, un tamiseur statique à grille courbe, une bougie filtrante du type Johnson Screens ou un ensemble de bougies filtrantes disposées en configuration Backwash de Pall, une crépine, un collecteur, ou un décanteur de type lamellaire.

12. Procédé selon la revendication 1, **caractérisé en ce que** le dispositif de séparation est une membrane filtrante en mode tangentiel en céramique.

13. Procédé selon la revendication 1, **caractérisé en ce qu'**il est mis en oeuvre dans une installation dans laquelle le dispositif de séparation est immergé dans le réacteur.

14. Procédé selon la revendication 13, **caractérisé en ce que** l'effluent à traiter est introduit dans le réacteur, le perméat du dispositif de séparation constitue l'effluent traité et il est extrait du réacteur, le catalyseur est retenu par le dispositif de séparation dans le réacteur.

15. Procédé selon la revendication 1, **caractérisé en ce qu'**il est mis en oeuvre dans une installation qui comprend d'une part un réacteur dans lequel l'effluent à traiter est soumis à l'ozonation, et d'autre part un dispositif de séparation, ledit dispositif de séparation étant relié au réacteur par une première conduite pour le transfert de l'effluent du réacteur vers le dispositif de séparation et par une seconde conduite pour le transfert du concentrat contenant le catalyseur vers le réacteur.

## Claims

1. Process for treating an effluent containing organic pollutants, comprising treating said effluent by ozonisation in the presence of a catalyst consisting of grains formed from a metal deposited on an oxide support, **characterised in that** the catalyst consists of a powder the grains of which consist of a catalytically active phase containing ruthenium and/or iridium on a support consisting of cerium oxide, zirconium oxide, titanium oxide or mixtures thereof, the particle size of the powder being between 20 and 500 µm, and **in that** it comprises:
- continuously introducing, into a reactor containing the catalyst, the effluent which is to be treated, on the one hand, and the ozone, on the other hand, the catalyst being kept in suspension in the reactor;
- passing the effluent treated by the ozone and catalyst continuously through a separation system with a view to separating the catalyst;
- recovering some of the treated effluent which is freed from the catalyst and recycling the remainder with the catalyst in the reactor.

2. Process according to claim 1, **characterised in that** the ozone is introduced in the form of an ozone-enriched gas, the gas being air or oxygen.

3. Process according to claim 1, **characterised in that** the respective flow rates of the effluent and ozonised gas are regulated such that the ratio of the mass of ozone to the mass of C corresponding to the pollutants is less than 40.

4. Process according to claim 1, **characterised in that** it is carried out at ambient temperature and atmospheric pressure.

5. Process according to claim 1, **characterised in that** the concentration of catalyst in the ozonising reactor is between 0.2 and 20 g/l.

6. Process according to claim 1, **characterised in that** the grains of catalyst have a particle size of between 50 and 200 µm, a mass by volume of between 1 and 3 g/cm³, a total pore volume of between 0.1 and 1 cm³/g, having mesopores with a mean diameter of between 10 and 40 nm.

7. Process according to claim 1, **characterised in that** the catalytically active phase represents between 0.5% and 10 wt.% of the catalyst.

8. Process according to claim 1, **characterised in that** the active phase of the catalyst further contains at least one other metal selected from among the noble metals.

9. Process according to claim 1, **characterised in that** the catalyst support further contains at least one mineral compound selected from among alumina, silica and active charcoal.

10. Process according to claim 1, **characterised in that** the catalyst support is such that it retains a specific surface area of at least 20 m²/g after having undergone calcining at 800°C for six hours.

11. Process according to claim 1, **characterised in that** the separation system is a separator of the hydrocyclone type, a static screen with a curved mesh, a filtering candle of the Johnson Screens type or a set of filtering candles arranged in a Pall Backwash configuration, a strainer, a collector or a lamellar decanter.

12. Process according to claim 1, **characterised in that** the separating device is a ceramic tangential-mode filtering membrane.

13. Process according to claim 1, **characterised in that** it is carried out in an installation in which the separating device is immersed in the reactor.

14. Process according to claim 13, **characterised in that** the effluent to be treated is introduced into the reactor, the permeate of the separating device constitutes the treated effluent and is extracted from the reactor, the catalyst is retained by the separating device in the reactor.

15. Process according to claim 1, **characterised in that** it is carried out in an installation which comprises on the one hand a reactor in which the effluent to be treated is subjected to ozonisation and on the other hand a separating device, said separating device being connected to the reactor by a first pipe for transferring the effluent from the reactor to the separating device and by a second pipe for transferring the concentrate containing the catalyst to the reactor.

## Patentansprüche

1. Verfahren zur Behandlung eines organische Verunreinigungen enthaltenden Abwassers, das darin besteht, dieses Abwasser in Gegenwart eines Katalysators, der aus aus einem Metall gebildeten Körnern besteht und auf einem oxidischen Träger aufgebracht ist, durch Ozonisierung zu behandeln, **dadurch gekennzeichnet, dass** der Katalysator aus einem Pulver, dessen Körner aus einer katalytisch aktiven Phase, die Ruthenium und/oder Iridium umfasst, bestehen, auf einem Träger, der aus Ceroxid, Zirconiumoxid, Titanoxid oder deren Gemischen gebildet ist, gebildet ist, wobei die Korngröße des Pulvers zwischen 20 und 500 µm beträgt, und dass es im:
- kontinuierlichen Einleiten einerseits des zu behandelnden Abwassers und andererseits des Ozons in einen Reaktor, der den Katalysator.enthält, der in dem Reaktor suspendiert gehalten wird,
- kontinuierlichen Durchleiten des durch das Ozon und den Katalysator behandelten Abwassers durch ein Trennsystem, um den Katalysator abzutrennen, und
- Rückgewinnen eines Teils des vom Katalysator befreiten behandelten Abwassers und Rückleiten des anderen Teils mit dem Katalysator in den Reaktor
besteht.

2. Verfahren nach Anspruch 1, **dadurch gekennzeichnet, dass** das Ozon in Form eines mit Ozon angereicherten Gases, das Luft oder Sauerstoff ist, eingeleitet wird.

3. Verfahren nach Anspruch 1, **dadurch gekennzeichnet, dass** der jeweilige Durchsatz von Abwasser und ozoniertem Gas derart geregelt wird, dass das Verhältnis von Ozonmasse zu der Masse C, die den Verunreinigungen entspricht, kleiner als 40 ist.

4. Verfahren nach Anspruch 1, **dadurch gekennzeichnet, dass** es bei Umgebungstemperatur und Atmosphärendruck durchgeführt wird.

5. Verfahren nach Anspruch 1, **dadurch gekennzeichnet, dass** die Katalysatorkonzentration im Ozonisierungsreaktor 0,2 bis 20 g/l beträgt.

6. Verfahren nach Anspruch 1, **dadurch gekennzeichnet, dass** die Katalysatorkörner eine Korngröße von 50 bis 200 µm, eine Dichte von 1 bis 3 g/cm³ und ein Gesamtporenvolumen von 0,1 bis 1 cm³/g, das Mesoporen mit einem mittleren Durchmesser von 10 bis 40 nm aufweist, besitzen.

7. Verfahren nach Anspruch 1, **dadurch gekennzeichnet, dass** die katalytisch aktive Phase zwischen 0,5 und 10 Gew.-% des Katalysators ausmacht.

8. Verfahren nach Anspruch 1, **dadurch gekennzeichnet, dass** die aktive Phase des Katalysators außerdem mindestens ein weiteres Metall, das aus den Edelmetallen ausgewählt ist, enthält.

9. Verfahren nach Anspruch 1, **dadurch gekennzeichnet, dass** der Katalysatorträger darüber hinaus mindestens eine anorganische Verbindung, die aus Aluminiumoxid, Siliciumdioxid und Aktivkohle ausgewählt ist, enthält.

10. Verfahren nach Anspruch 1, **dadurch gekennzeichnet, dass** der Katalysatorträger derart ist, dass er eine spezifische Oberfläche von mindestens 20 m²/g behält, nachdem er 6 Stunden lang bei 800 °C calciniert worden ist.

11. Verfahren nach Anspruch 1, **dadurch gekennzeichnet, dass** das Trennsystem ein Separator vom Typ Hydrozyklon, eine statische Siebeinrichtung mit gekrümmtem Gitter, eine Filterkerze vom Typ Johnson Screens bzw. eine Gruppe von Filterkerzen, die in Pall-Backwash-Konfiguration angeordnet sind, ein Saugfilter, ein Sammler oder ein Lamellendekanter ist.

12. Verfahren nach Anspruch 1, **dadurch gekennzeichnet, dass** die Trenneinrichtung eine Keramikfiltermembran im Tangentialmodus ist.

13. Verfahren nach Anspruch 1, **dadurch gekennzeichnet, dass** es in einer Vorrichtung durchgeführt wird, in welcher die Trenneinrichtung in den Reaktor getaucht ist.

14. Verfahren nach Anspruch 13, **dadurch gekennzeichnet, dass** das zu behandelnde Abwasser in den Reaktor geleitet wird, das Permeat der Trenneinrichtung das behandelte Abwasser bildet und aus dem Reaktor abgeleitet wird und der Katalysator von der Trenneinrichtung im Reaktor zurückgehalten wird.

15. Verfahren nach Anspruch 1, **dadurch gekennzeichnet, dass** es in einer Vorrichtung durchgeführt wird, die einerseits einen Reaktor, in welchem das zu behandelnde Abwasser einer Ozonisierung unterworfen wird, und andererseits eine Trenneinrichtung umfasst, wobei die Trenneinrichtung durch eine erste Leitung für den Transport des Abwassers aus dem Reaktor in die Trenneinrichtung und durch eine zweite Leitung für den Transport des den Katalysator enthaltenden Konzentrats in den Reaktor mit dem Reaktor verbunden ist.
